# EUROPEAN PATENT APPLICATION

(11) **EP 4 152 889 A1**
(43) Date of publication of application: **22.03.2023**
(21) Application number: 20947598.7
(22) Date of filing: 29.07.2020
(51) Int. Cl.: H04W 92/18, H04W 48/16

(54) **RELAY DISCOVERY METHOD, AND TERMINAL**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN)
(74) Representative: Taor, Simon Edward William
(86) International application number: PCT/CN2020/105642
(87) International publication number: WO 2022/021165

(57) **Abstract**

The present disclosure relates to a relay discovery method and a terminal. The relay discovery method includes: receiving, by a first terminal, a discovery message transmitted by a second terminal via a Sidelink Signaling Radio Bearer (SL SRB); and parsing, by the first terminal, the discovery message to determine whether to select the second terminal as its relay terminal. In a relay discovery process, the discovery message can be transmitted via the sidelink signaling radio bearer, i.e., the discovery message can be transmitted without using a sidelink discovery channel. Thus, there is no need to add any transport channel or physical channel, which can reduce the system complexity.

## Description

### TECHNICAL FIELD

The present disclosure relates to communication technology, and more particularly, to a relay discovery method and a terminal.

### BACKGROUND

On the PC5 interface of Long Term Evolution (LTE) of the 3^{rd} Generation Partnership Project (3GPP), a transport channel called Sidelink Discovery Channel (SL-DCH) is introduced. In a relay discovery process, a discovery request message and a discovery message are mapped to the SL-DCH, and the SL-DCH is transmitted via a Physical Sidelink Discovery Channel (PSDCH). In order to simplify the transmission and reception of the discovery message and the discovery request message, the above new transport channel and physical channel have been introduced in the LTE system. However, an additional mechanism for this needs to be introduced in the control plane protocol and the data plane protocol of such communication system, thereby introducing unnecessary system complexity.

### SUMMARY

The embodiments of the present disclosure provide a relay discovery method and a terminal, which does not need to add any new transport channel or physical channel and thereby reducing system complexity.

An embodiment of the present disclosure provides a relay discovery method. The method includes: receiving, by a first terminal, a discovery message transmitted by a second terminal via a Sidelink Signaling Radio Bearer (SL SRB); and parsing, by the first terminal, the discovery message to determine whether to select the second terminal as its relay terminal.

An embodiment of the present disclosure provides a relay discovery method. The method includes: transmitting, by a second terminal, a discovery message to a first terminal via a Sidelink Signaling Radio Bearer (SL SRB), such that the first terminal parses the discovery message to determine whether to select the second terminal as its relay terminal.

An embodiment of the present disclosure provides a first terminal. The first terminal includes:
a receiving unit configured to receive a discovery message transmitted by a second terminal via a Sidelink Signaling Radio Bearer (SL SRB); and
a processing unit configured to parse the discovery message to determine whether to select the second terminal as its relay terminal.

An embodiment of the present disclosure provides a second terminal. The second terminal includes:
a transmitting unit configured to transmit a discovery message to a first terminal via a Sidelink Signaling Radio Bearer (SL SRB), such that the first terminal parses the discovery message to determine whether to select the second terminal as its relay terminal.

In an embodiment of the present disclosure, a terminal device is provided. The terminal device includes a processor and a memory. The memory has a computer program stored thereon, and the processor is configured to invoke and execute the computer program stored in the memory to cause the terminal device to perform any of the above relay discovery methods.

In an embodiment of the present disclosure, a chip is provided. The chip is configured to perform the above relay discovery method.

In particular, the chip includes a processor configured to invoke and execute a computer program from a memory, to cause a device provided with the chip to perform any of the above relay discovery methods.

In an embodiment of the present disclosure, a computer-readable storage medium is provided. The computer-readable storage medium stores a computer program which, when executed by a device, causes the device to perform any of the above relay discovery methods.

In an embodiment of the present disclosure, a computer program product is provided. The computer program product includes computer program instructions that cause a computer to perform any of the above relay discovery methods.

In an embodiment of the present disclosure, a computer program is provided. The computer program, when executed by a computer, causes the computer to perform any of the above relay discovery methods.

With the embodiments of the present disclosure, in a relay discovery process, the discovery message can be transmitted via the sidelink signaling radio bearer, i.e., the discovery message can be transmitted without using a sidelink discovery channel. Thus, there is no need to add any transport channel or physical channel, which can reduce the system complexity and reduce design and Research & Development costs.

### BRIEF DESCRIPTION OF THE DRAWINGS

FIG. 1 is a schematic diagram of an application scenario according to an embodiment of the present disclosure.
FIG. 2 is a schematic flowchart illustrating a relay discovery method according to an embodiment of the present disclosure.
FIG. 3 is a schematic flowchart illustrating a relay discovery method according to another embodiment of the present disclosure.
FIG. 4 is a schematic diagram showing access to a network via a relay UE.
FIG. 5 is a schematic diagram showing Mode B of relay discovery.
FIG. 6 is a schematic diagram showing Mode A of relay discovery.
FIG. 7 is a schematic diagram showing a relay in a sidelink scenario.
FIG. 8 is a schematic block diagram of a first terminal according to an embodiment of the present disclosure.
FIG. 9 is a schematic block diagram of a first terminal according to another embodiment of the present disclosure.
FIG. 10 is a schematic block diagram of a second terminal according to an embodiment of the present disclosure.
FIG. 11 is a schematic block diagram of a second terminal according to another embodiment of the present disclosure.
FIG. 12 is a schematic block diagram of a communication device according to an embodiment of the present disclosure.
FIG. 13 is a schematic block diagram of a chip according to an embodiment of the present disclosure.
FIG. 14 is a schematic block diagram of a communication system according to an embodiment of the present disclosure.

### DETAILED DESCRIPTION

The technical solutions in the embodiments of the present disclosure will be described below with reference to the drawings in the embodiments of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may also be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

For the purpose of illustration rather than limiting, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

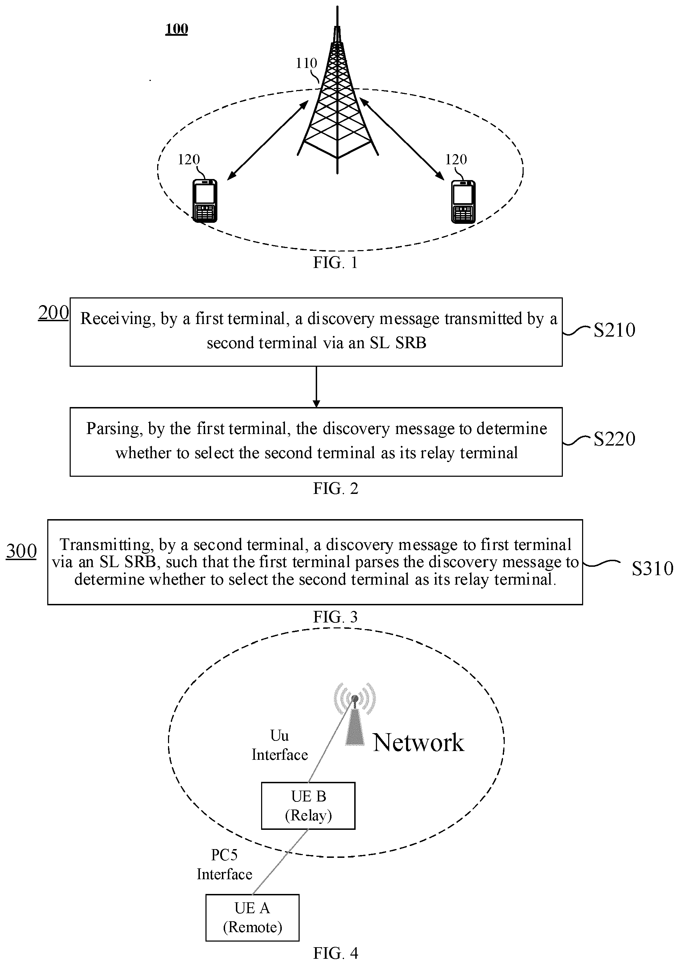

FIG. 1 illustratively shows a communication system 100. The communication system 100 includes one network device 1100 and two terminal devices 120. Alternatively, the communication system 100 may include multiple network devices 110, and the coverage of each network device 110 may include other numbers of terminal devices 120. The embodiment of the present disclosure is not limited to this.

Optionally, the communication system 100 may also include other network entities such as Mobility Management Entity (MME) or Access and Mobility Management Function (AMF). The embodiment of the present disclosure is not limited to this.

Here, the network device may further include an access network device and a core network device. That is, the wireless communication system may further include a plurality of core networks for communicating with the access network device. The access network device may be an evolutional Node B (referred to as eNB or e-NodeB), a macro base station, a micro base station (also referred to as "small base station"), a pico base station, an Access Point (AP), a Transmission Point (TP) or a new generation Node B (gNodeB), etc., in a Long-Term Evolution (LTE) system, a next-generation (mobile communication system) (next radio, or NR) system, or an Authorized Auxiliary Access Long-Term Evolution (LAA) system.

It can be appreciated that, in the embodiments of the present disclosure, a device having a communication function in a network/system may be referred to as a communication device. Taking the communication system shown in FIG. 1 as an example, the communication devices may include the network device and the terminal device with communication functions. The network device and the terminal device may be the specific devices described in the embodiments of the present disclosure, and details thereof will be omitted here. The communication devices may also include other devices in the communication system, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In order to facilitate understanding of the technical solutions of the embodiments of the present disclosure, the related technologies of the embodiments of the present disclosure will be described below. The following related technologies can be arbitrarily combined with the technical solutions of the embodiments of the present disclosure as optional solutions, which are all to be encompassed by the scope of the embodiments of the present disclosure.

FIG. 2 is a schematic flowchart illustrating a relay discovery method 200 according to an embodiment of the present disclosure. The method can optionally be, but not limited to be, applied to the system shown in FIG. 1. The method includes at least some of the following contents.

At S210, a first terminal receives a discovery message transmitted by a second terminal via a Sidelink (SL) Signaling Radio Bearer (SRB).

At S220, the first terminal parses the discovery message to determine whether to select the second terminal as its relay terminal.

Exemplarily, in a relay discovery process, the first terminal may receive the discovery message from the second terminal via the SL SRB, and may reuse the existing transport channel and physical channel, including e.g., PSSCH, PSCCH, etc., for sidelink communication. Therefore, in the relay discovery process, the discovery message can be transmitted without using the sidelink discovery channel, and there is no need to add any transport channel or physical channel, thereby reducing the system complexity.

Optionally, in an embodiment of the present disclosure, the first terminal parsing the discovery message to determine whether to select the second terminal as its relay terminal may include:
the first terminal parsing the discovery message to determine that the second terminal is available for serving as a relay for the first terminal, and selecting the second terminal as its relay terminal when measuring that a radio signal strength of the second terminal is higher than a first threshold.

Exemplarily, the discovery message transmitted by the second terminal may include information on various services supported by the second terminal. If the first terminal parses the discovery message to determine that the second terminal can serve as the relay of the first terminal (for example, if a service that the first terminal is interested in is found in the discovery message), and parses the discovery message to learn that a radio signal strength of the second terminal is higher than a defined first threshold, it can select the second terminal as its relay terminal. Here, the first threshold may be configured by a network, or may be pre-configured.

Optionally, in an embodiment of the present disclosure, the first terminal receiving the discovery message transmitted by the second terminal via the SL SRB may further include:
the first terminal receiving a discovery announcement message transmitted periodically by the second terminal via the SL SRB.

Optionally, in an embodiment of the present disclosure, the discovery announcement message may include at least a transmission period.

Optionally, in an embodiment of the present disclosure, the method may further include:
receiving, by the first terminal, the discovery announcement message from the second terminal periodically via the SL SRB based on the transmission period after obtaining the transmission period.

Optionally, in an embodiment of the present disclosure, the transmission period may be equal to a period of radio resources on which the discovery announcement message is transmitted.

Optionally, in an embodiment of the present disclosure, the period of the radio resources may be a period of pre-configured radio resources configured by a network, or a period of radio resources obtained autonomously by the second terminal.

Optionally, in an embodiment of the present disclosure, the method may further include: transmitting, by the first terminal, a discovery request message via the SL SRB. Optionally, this step may be performed before S210. In this case, after receiving the discovery request message, the second terminal may return a discovery response message to the first terminal. The first terminal receiving the discovery message transmitted by the second terminal via the SL SRB in S210 may include: the first terminal receiving the discovery response message transmitted by the second terminal via the SL SRB.

An exemplary scheme may be as follows. The first terminal first transmits a discovery request message to the second terminal via the SL SRB. After receiving the discovery request message, the second terminal transmits a discovery message to the first terminal via the SL SRB. The first terminal selects the relay terminal based on the discovery message transmitted by the second terminal in response to the discovery request message.

An exemplary scheme may be as follows. The second terminal periodically transmits the discovery message to the first terminal via the SL SRB. In this scheme, the second terminal does not need to trigger transmission of the discovery message in response to the received discovery request message. The first terminal selects the relay terminal based on the discovery message periodically transmitted by the second terminal.

Optionally, in an embodiment of the present disclosure, the first terminal may trigger transmission of the discovery request message or monitor the discovery message in at least one of the following cases:
the first terminal is out of a coverage of a network device and needs to be connected to the network device, and the second terminal is within the coverage of the network device;
the first terminal is within the coverage of the network device, but a measured Reference Signal Received Power (RSRP) of a radio signal from the network device accessed by the first terminal is lower than a second threshold, and the second terminal is within the coverage of the network device; or
the first terminal needs to be connected to a third terminal.

Exemplarily, in a scenario of uplink communication, it can be determined whether to trigger transmission of the discovery request message or monitor the discovery message based on a positional relationship between the first terminal and the network device, a signal strength, and the like. It is assumed that the first terminal is out of the coverage of the network device, and the second terminal is within the coverage of the network device. The second terminal can maintain a good communication connection with the network device, and the first terminal can trigger transmission of the discovery request message or monitor the discovery message to determine whether the second terminal can serve as a relay terminal to communicate with the network device.

For example, Terminal A1 is within the coverage of Cell C1 and Terminal A2 is within the coverage of Cell C2, and Terminal A1 can trigger transmission of a discovery request message via an SL SRB or monitor a discovery message, and select Terminal A2 as a relay terminal to communicate with Cell C2.

In another example, Terminal A1 and Terminal A2 are both located in Cell C1, the RSRP of the radio signal of Cell C1 measured by Terminal A1 is lower than a second threshold, and the RSRP of the radio signal of Cell C1 measured by Terminal A2 is higher than or equal to the second threshold. Terminal A1 can trigger transmission of a discovery request message via an SL SRB or monitor a discovery message, and select Terminal A2 as a relay terminal to communicate with Cell C1.

Exemplarily, in a sidelink communication scenario, it can be determined whether to trigger transmission of the discovery request message or monitor the discovery message based on a positional relationship between the first terminal, the second terminal, and a third terminal, a signal strength, etc. It is assumed that the distance between the first terminal and the third terminal is relatively large, and the signal strength of the third terminal as measured by the first terminal is relatively low, and the distance between the first terminal and the second terminal is relatively small, and the signal strength of the second terminal as measured by the first terminal is relatively high. In addition, the distance between the second terminal and the third terminal is relatively small, and the signal strength of the third terminal as measured by the second terminal is relatively high. The first terminal may trigger transmission of a discovery request message or monitor a discovery message to determine whether the second terminal can serve as a relay terminal to communicate with the network device.

In an embodiment of the present disclosure, there may be one or more second terminals for the first terminal to select from as the relay, which may be flexibly determined depending on the actual application scenario, and the present disclosure is not limited to this.

Optionally, in an embodiment of the present disclosure, the discovery request message may be included in a Medium Access Control (MAC) Protocol Data Unit (PDU) that includes a Logical Channel Identity (LCID) of a selected SL SRB.

For example, a correspondence between LCIDs and SL SRBs may include: LCID=0 corresponds to SRBO, LCID=1 corresponds to SRB1, LCID=2 corresponds to SRB2, and LCID=3 corresponds to SRB3. The LCIDs can also be represented in binary. For example, LCID of 0 can be represented as 000000; LCID of 2 can be represented as 000001; LCID of 2 can be represented as 000010; LCID of 3 can be represented as 000011, and so on.

Optionally, in an embodiment of the present disclosure, the selected SL SRB may be SRBO. The first terminal may transmit the discovery request message and receive the discovery message via SRBO.

For example, the LCID of SRBO may be 0. When the first terminal triggers transmission of the discovery request message, a Packet Data Convergence Protocol (PDCP) PDU may be generated, and the PDCP PDU may include the discovery request message to be transmitted. The PDCP PDU first arrives at a Radio Link Control (RLC) layer, and an Unacknowledged Mode (UM) transmission mode is used at the RLC layer. Then, it is converted into a MAC PDU at the MAC layer, and the LCID of 0 can be added to the MAC PDU. The MAC PDU can then be transmitted directly on the PSSCH.

The above SRBO is only a non-limiting example, and another selected SL SRB may also be added in the MAC PDU. For example, a new SL SRB type may be added, and the new SL SRB may be identified with an LCID from 20 to 63. The first terminal may transmit the discovery request message and receive the discovery message via the new SL SRB. In addition, if the new SL SRB is used, an implementation is to be transparent to the PDCP and RLC layers, i.e., without the protocol header of the PDCP layer or the protocol header of the RLC layer, that is, RLC Transparent Mode (TM) is used.

Optionally, in an embodiment of the present disclosure, the first terminal transmitting the discovery request message via the SL SRB may include:

the first terminal transmitting the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

For example, the first terminal may transmit an SL SRB including the discovery request message to the second terminal on a PSSCH, and receives an SL SRB including the discovery message on a PSSCH from the second terminal.

Optionally, in an embodiment of the present disclosure, the method may further include: determining a radio configuration parameter for the first terminal in at least one of the following schemes:
the first terminal uses a pre-configured radio configuration parameter when the first terminal is out of the coverage of the network device; or
the first terminal uses a radio configuration parameter broadcasted by the network device when the first terminal is within the coverage of the network device.

In an embodiment of the present disclosure, the radio configuration parameter may include various wireless resources, wireless parameters, and the like. For example, the radio configuration parameter may include the above radio resource pool associated with the PSSCH.

Optionally, in an embodiment of the present disclosure, the first terminal using the radio configuration parameter broadcast by the network device when the first terminal is within the coverage of the network device may include at least one of:
the first terminal using the radio configuration parameter broadcasted by the network device when the first terminal is within the coverage of the network device and the first terminal is in an RRC idle state; or
the first terminal using a radio resource and parameter broadcasted by the network device or a dedicated radio configuration parameter for the first terminal when the first terminal is within the coverage of the network device and the first terminal is in an RRC connected state.

In the embodiment of the present disclosure, in a relay discovery process, the first terminal can receive the discovery message or transmit the discovery request message via the SL SRB, and can reuse the PSSCH and the PSCCH, without using the sidelink discovery channel to transmit the discovery message. Therefore, there is no need to add any transport channel or physical channel, which can reduce system complexity and reduce design and Research & Development costs.

FIG. 3 is a schematic flowchart illustrating a relay discovery method 300 according to another embodiment of the present disclosure. The method can optionally be, but not limited to be, applied to the system shown in FIG. 1. The descriptions in this embodiment that are the same as those of the method 200 have the same meaning, and will not be repeated here. The method of this embodiment includes at least part of the following contents.

At S310, a second terminal transmits a discovery message to a first terminal via a Sidelink Signaling Radio Bearer (SL SRB), such that the first terminal parses the discovery message to determine whether to select the second terminal as its relay terminal.

Exemplarily, in a relay discovery process, the second terminal can transmit the discovery message to the first terminal via the SL SRB, and may reuse the existing transport channel and physical channel, including e.g., PSSCH, PSCCH, etc., for sidelink communication. Therefore, in the relay discovery process, the discovery message can be transmitted without using the sidelink discovery channel, and there is no need to add any transport channel or physical channel, thereby reducing the system complexity.

Exemplarily, the discovery message transmitted by the second terminal may include information on various services supported by the second terminal. If the first terminal parses the discovery message to determine that the second terminal can serve as the relay of the first terminal (for example, if a service that the first terminal is interested in is found in the discovery message), and parses the discovery message to learn that a radio signal strength of the second terminal is higher than a defined first threshold, it can select the second terminal as its relay terminal. Here, the first threshold may be set according to device characteristics of the first terminal and/or the second terminal.

Optionally, in an embodiment of the present disclosure, the second terminal transmitting the discovery message to the first terminal via the SL SRB may further include:
the second terminal transmitting the discovery announcement message periodically to the first terminal via the SL SRB.

Optionally, in an embodiment of the present disclosure, the discovery announcement message may include at least a transmission period.

Optionally, in an embodiment of the present disclosure, the transmission period may be equal to a period of radio resources on which the discovery announcement message is transmitted.

Optionally, in an embodiment of the present disclosure, the period of the radio resources may be a period of pre-configured radio resources configured by a network, or a period of radio resources obtained autonomously by the second terminal.

Optionally, in an embodiment of the present disclosure, the method may further include: receiving, by the second terminal, a discovery request message transmitted by the first terminal via the SL SRB. Optionally, this step may be performed before S310. In this case, the second terminal transmitting the discovery message to the first terminal via the SL SRB at S310 may further include: transmitting, by the second terminal, a discovery response message to the first terminal via the SL SRB.

An exemplary scheme may be as follows. The first terminal first transmits a discovery request message to the second terminal via the SL SRB. After receiving the discovery request message, the second terminal transmits a discovery message to the first terminal via the SL SRB. The first terminal selects the relay terminal based on the discovery message transmitted by the second terminal in response to the discovery request message.

An exemplary scheme may be as follows. The second terminal periodically transmits the discovery message to the first terminal via the SL SRB. In this scheme, the second terminal does not need to trigger transmission of the discovery message in response to the received discovery request message. The first terminal selects the relay terminal based on the discovery message periodically transmitted by the second terminal.

Optionally, in an embodiment of the present disclosure, the second terminal may be within a coverage of a network device.

Exemplarily, in a scenario of uplink communication, it can be determined whether to trigger transmission of the discovery request message or monitor the discovery message based on a positional relationship between the first terminal and the network device, a signal strength, and the like. It is assumed that the first terminal is out of the coverage of the network device, and the second terminal is within the coverage of the network device. The second terminal can maintain a good communication connection with the network device, and the first terminal can trigger transmission of the discovery request message or monitor the discovery message to determine whether the second terminal can serve as a relay terminal to communicate with the network device.

Exemplarily, in a sidelink communication scenario, it can be determined whether to trigger transmission of the discovery request message or monitor the discovery message based on a positional relationship between the first terminal, the second terminal, and a third terminal, a signal strength, etc. It is assumed that the distance between the first terminal and the third terminal is relatively large, and the signal strength of the third terminal as measured by the first terminal is relatively low, and the distance between the first terminal and the second terminal is relatively small, and the signal strength of the second terminal as measured by the first terminal is relatively high. In addition, the distance between the second terminal and the third terminal is relatively small, and the signal strength of the third terminal as measured by the second terminal is relatively high. The first terminal may trigger transmission of a discovery request message or monitor a discovery message to determine whether the second terminal can serve as a relay terminal to communicate with the network device.

Optionally, in an embodiment of the present disclosure, the discovery request message may be included in a MAC PDU that includes an LCID of a selected SL SRB.

Optionally, in an embodiment of the present disclosure, the selected SL SRB may be SRBO, and the LCID of SRBO may be 0. The second terminal may receive the discovery request message and transmit the discovery message via SRBO.

The above SRBO is only a non-limiting example, and another selected SL SRB may also be added in the MAC PDU. For example, a new SL SRB type may be added, and the new SL SRB may be identified with an LCID from 20 to 63. The second terminal may receive the discovery request message and transmit the discovery message via the new SL SRB.

Optionally, in an embodiment of the present disclosure, the second terminal receiving the discovery request message transmitted by the first terminal via the SL SRB may further include:
receiving, by the second terminal, the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

For example, the second terminal may receive an SL SRB including the discovery request message from the first terminal on a PSSCH, and transmit an SL SRB including the discovery message to the first terminal on a PSSCH.

Optionally, in an embodiment of the present disclosure, the method may further include determining the radio configuration parameter for the second terminal in at least one of the following schemes:
the second terminal uses a radio configuration parameter broadcasted in a network system message when the second terminal is in an RRC idle state; or
the second terminal uses a radio configuration parameter broadcasted by a network device or a dedicated radio configuration parameter for the second terminal as configured by the network device, when the second terminal is in an RRC connected state.

For a specific example of the second terminal performing the method 300 in this embodiment, reference may be made to the relevant description about the second terminal in the above method 200, and details thereof will be omitted here for brevity.

Since a signaling radio bearer and a data radio bearer are mapped together to another transport channel, i.e., Sidelink Shared Channel (SL-SCH), there is no concept of logical channel for information transmitted on the SL-DCH. The relay discovery method in the embodiment of the present disclosure does not need to add any SL-DCH channel. In an application example, a remote terminal (Remote LTE) is connected to a radio network node or another Remote LTE via one or more relay terminals (Relay LTEs). The point-to-point connection between the Remote UE and the Relay UE may be connected via a PC5 interface defined by the 3GPP specification.

Before the Remote UE establishes the point-to-point connection with the Relay UE, it needs to discover and select the Relay UE. There are two modes for discovering and selecting the Relay UE.

Mode A: The Relay UE periodically transmits a discovery message. Logically, the message tells the remote UE: "This is a relay UE that supports certain services".

Mode B: The Remote LTE transmits a discovery request message first. Logically, this message is asking, "Are you there, Relay UE?". If the Relay UE receives this message, the Relay UE will transmit the discovery message mentioned in Mode A above.

The discovery message and the discovery request message may be transmitted via a sidelink signaling radio bearer on the PC5 interface of the 3GPP NR. The sidelink signaling radio bearer may be a defined sidelink signaling radio bearer, such as SRBO, or may be different from the existing sidelink signaling radio bearers. In the latter case, a new default radio parameter can be defined for the sidelink signaling radio bearer in the 3GPP standard specification, and can be mapped to the transport channel of Sidelink Shared Channel (SL-SCH) as the defined sidelink signaling radio bearer, and the SL-SCH may be transmitted over a Physical Sidelink Shared Channel (PSSCH).

### Example 1: UE to Network Relay

As shown in FIG. 4, it is assumed that both UE A and UE B support the 3GPP NR PC5 interface protocol and also support the 3GPP NR Uu interface protocol. LTE A and LTE B have been authenticated by the network when they are in the network coverage. UE A is authenticated as being able to access the wireless network via a relay UE, that is, UE A is authorized as a Remote UE. UE B is authenticated as a relay node, that is, UE B can be a relay UE. Furthermore, both UE A and UE B are authorized to transmit and receive relay discovery related messages, such as discovery messages and discovery request messages.

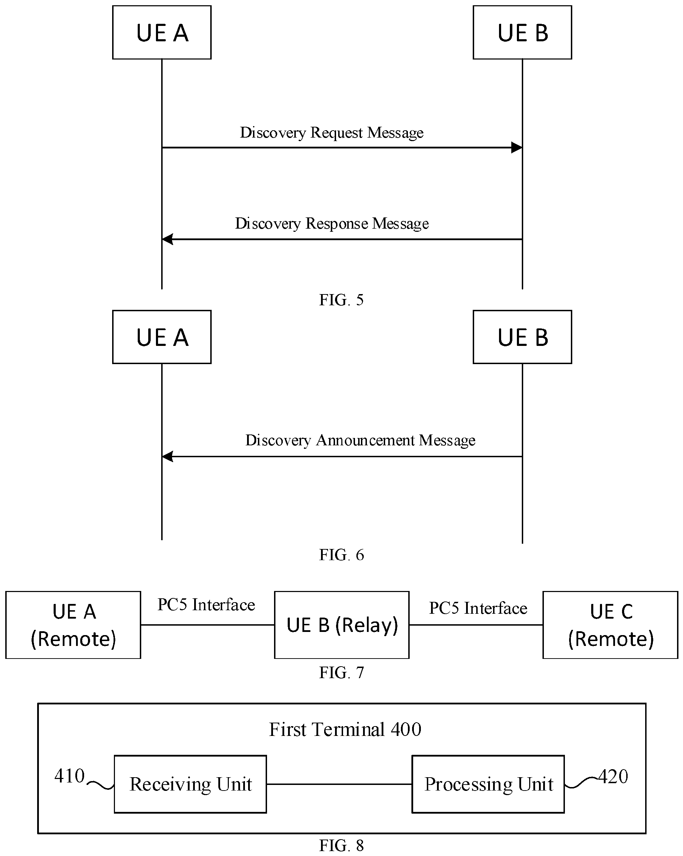

As shown in FIG. 5, when UE B operates in Mode B, and when UE A is out of the coverage of the network and needs to connect to the network, a discovery request message will be transmitted. After receiving the discovery request message from LTE A, LTE B transmits a discovery message such as a discovery response message.

As shown in FIG. 6, UE B can also operate in Mode A. That is, when no discovery request message is received, it can also periodically transmit a discovery message, such as a discovery announcement message.

The content of the message transmitted by the relay UE in Mode A may be different from the content of the message transmitted by the relay LTE in Mode B. For example, the relay UE in Mode A may periodically transmit a discovery announcement message. In another example, the relay UE in Mode B may transmit a discovery response message after receiving the discovery request message.

UE B must be within the network coverage. When UE B is in the RRC_IDLE state, UE B can use a radio resource and a radio configuration parameter broadcasted in a network system message. When UE B is in the RRC_CONNECTED state, in addition to the broadcasted radio resource and radio configuration parameter, the network can also configure a dedicated radio resource for LTE B, e.g., periodic pre-configured radio resources for transmission. If LTE A is out of the network coverage as shown in FIG. 1, it can only rely on the pre-configured radio resource and parameter. Alternatively, UE A may be within the coverage of the network and use the radio resource and configuration parameter broadcasted by the network. In this case, UE A needs to measure the radio signal of the current cell. For example, only when the RSRP of the radio signal is lower than a predetermined threshold, the discovery request message can be triggered or the discovery message can be directly monitored.

The radio parameters of all SRBs of the 3GPP NR PC5 interface are fixed in the protocol. When UE A or LTE B is triggered to transmit a discovery request message or a discovery message, a PDCP PDU will be generated, and the PDCP PDU includes the above discovery message or discovery request message. The PDCP PDU may use the format having a sequence number length of 12 bits, and may not contain Message Authentication Code - Integrity (MAC-I) information related to integrity protection. At the RLC layer, the sequence number is 6 bits long, and is transmitted in the UM mode. At the MAC layer, it is identified according to the LCID of the selected SL SRB, for example, SRBO (i.e., LCID=0) may be used. Then, the MAC PDU is directly transmitted on the PSSCH using the above radio resource. The radio resource may further include configuration information for the Physical Sidelink Control Channel (PSCCH).

When UE A finds a service that UE A is interested in from the discovery message transmitted by UE B, and the measured radio signal strength of UE B is higher than a threshold specified by a network, it will select UE B as its relay and continue with subsequent relay operations.

### Example 2: UE to UE relay

As shown in FIG. 7, it is assumed that UE A, UE B, and UE C all support the 3GPP NR PC5 interface protocol. UE A, UE B, and UE C have been authenticated by the network when they are in the network coverage, and UE A and UE C are authenticated as being able to access the wireless network via a relay UE, that is, UE A and UE C are authorized as Remote UEs. UE B is authenticated as a relay node. UE A, UE B and UE C are all authorized to transmit and receive relay discovery related messages, such as discovery messages and discovery request messages.

When UE A needs to connect to UE C, it will transmit a discovery request message. After receiving the discovery request message from UE A, UE B transmits a discovery message. UE B can also work in Mode A, that is, when no discovery request message is received, it can also periodically transmit a discovery message.

The radio parameters of all SRBs of the 3GPP NR PC5 interface are fixed in the protocol. When UE A, LTE C, or LTE B is triggered to transmit a discovery request message or a discovery message, a PDCP PDU will be generated, and the PDCP PDU includes the above discovery message or discovery request message. The PDCP PDU may use the format having a sequence number length of 12 bits, and may not contain Message Authentication Code - Integrity (MAC-I) information related to integrity protection. At the RLC layer, the sequence number is 6 bits long, and is transmitted in the UM mode. At the MAC layer, it is identified according to the LCID of the selected SL SRB, for example, SRBO (i.e., LCID=0) may be used. Then the MAC PDU is directly transmitted on the PSSCH according to the above radio resources. The radio resource may further include configuration information for the Physical Sidelink Control Channel (PSCCH).

When UE A or UE C finds a service that UE A or UE C is interested in from the discovery message transmitted by LTE B, and the measured radio signal strength of LTE B is higher than a threshold specified by a network, it will select this UE as its relay.

The three UEs selects from a pre-configured radio resource and parameter, a broadcasted radio resource and parameter, and a radio resource and parameter configured by the network, depending on the network coverage where the UE is located. If a UE is out of the coverage of the network, then the pre-configured radio resource and parameter can be used. If it is within the coverage of the network, but in the RRC_IDLE state, the radio resource and parameter broadcasted by the network can be used, or if it is in the RRC_CONNECTED state, either the radio resource and parameter broadcasted by the network or the dedicated radio resource and parameter can be used. The radio resource and parameter may be collectively referred to as a radio configuration parameter.

FIG. 8 is a schematic block diagram of a first terminal 400 according to an embodiment of the present disclosure. The first terminal 400 may include:
a receiving unit 410 configured to receive a discovery message transmitted by a second terminal via an SL SRB; and
a processing unit 420 configured to parse the discovery message to determine whether to select the second terminal as its relay terminal.

Optionally, in an embodiment of the present disclosure, the processing unit 420 may be further configured to parse the discovery message to determine that the second terminal is available for serving as a relay for the first terminal, and select the second terminal as its relay terminal when measuring that a radio signal strength of the second terminal is higher than a first threshold.

Optionally, in an embodiment of the present disclosure, the receiving unit 410 may be further configured to receive a discovery announcement message transmitted periodically by the second terminal via the SL SRB.

Optionally, in an embodiment of the present disclosure, the discovery announcement message may include at least a transmission period.

Optionally, in an embodiment of the present disclosure, the receiving unit may be further configured to receive the discovery announcement message from the second terminal periodically via the SL SRB based on the transmission period after obtaining the transmission period.

Optionally, in an embodiment of the present disclosure, the transmission period may be equal to a period of radio resources on which the discovery announcement message is transmitted.

Optionally, in an embodiment of the present disclosure, the period of the radio resources may be a period of pre-configured radio resources configured by a network, or a period of radio resources obtained autonomously by the second terminal.

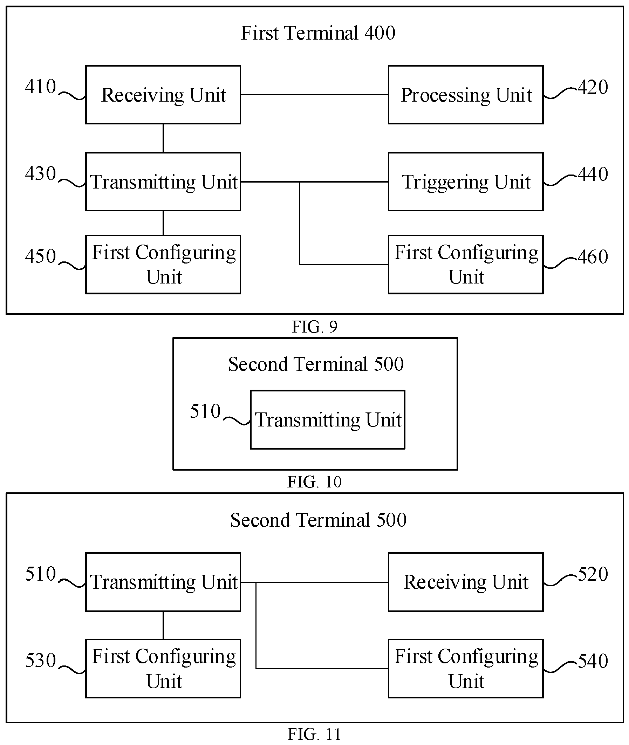

Optionally, in an embodiment of the present disclosure, as shown in FIG. 9, the first terminal may further include:
a transmitting unit 430 configured to transmit a discovery request message via the SL SRB.

The receiving unit 410 may be further configured to receive a discovery response message transmitted by the second terminal via the SL SRB.

Optionally, in an embodiment of the present disclosure, the first terminal may further include: a triggering unit 440 configured to trigger transmission of the discovery request message or monitor the discovery message in at least one of the following cases:
the first terminal is out of a coverage of a network device and needs to be connected to the network device, and the second terminal is within the coverage of the network device;
the first terminal is within the coverage of the network device, but a measured Reference Signal Received Power (RSRP) of a radio signal from the network device accessed by the first terminal is lower than a second threshold, and the second terminal is within the coverage of the network device; or
the first terminal needs to be connected to a third terminal.

Optionally, in an embodiment of the present disclosure, the discovery request message may be included in a MAC PDU that includes an LCID of a selected SL SRB.

Optionally, in an embodiment of the present disclosure, the selected SL SRB may be SRBO, and the LCID of SRBO may be 0.

Optionally, in an embodiment of the present disclosure, the transmitting unit may be further configured to transmit the discovery request message on a Physical Sidelink Shared Channel (PSSCH) associated with a radio resource pool that includes configuration information of a Physical Sidelink Control Channel (PSCCH). The PSCCH is a control channel when the PSSCH is transmitted.

Optionally, in an embodiment of the present disclosure, the first terminal may further include at least one of:
a first configuring unit 450 configured to use a pre-configured radio configuration parameter when the first terminal is out of the coverage of the network device; and
a second configuring unit 460 configured to use a radio configuration parameter broadcasted by the network device when the first terminal is within the coverage of the network device.

Optionally, in an embodiment of the present disclosure, the second configuration unit may be further configured to perform at least one of:
using the radio configuration parameter broadcasted by the network device when the first terminal is within the coverage of the network device and the first terminal is in an RRC idle state; or
using a radio resource and parameter broadcasted by the network device or a dedicated radio configuration parameter for the first terminal when the first terminal is within the coverage of the network device and the first terminal is in an RRC connected state.

The first terminal 400 in the embodiment of the present disclosure can implement the corresponding functions of the first terminal in the above method embodiments. For the corresponding processes, functions, implementations, and advantageous effects of each module (sub-module, unit, or component, etc.) in the first terminal 400, reference may be made to the corresponding descriptions in the above method embodiments, and details will be omitted here.

It should be noted that the functions described in connection with each module (sub-module, unit, or component, etc.) in the first terminal 400 of the embodiment of the present disclosure may be implemented by a different module (sub-module, unit, or component, etc.), or may be implemented by the same module (sub-module, unit or component, etc.).

FIG. 10 is a schematic block diagram of a second terminal 500 according to an embodiment of the present disclosure. The second terminal 500 may include:
a transmitting unit 510 configured to transmit a discovery message to a first terminal via a Sidelink Signaling Radio Bearer (SL SRB), such that the first terminal parses the discovery message to determine whether to select the second terminal as its relay terminal.

Optionally, in an embodiment of the present disclosure, the transmitting unit 510 may be further configured to transmit a discovery announcement message periodically to the first terminal via the SL SRB.

Optionally, in an embodiment of the present disclosure, the discovery announcement message may include at least a transmission period.

Optionally, in an embodiment of the present disclosure, the transmission period may be equal to a period of radio resources on which the discovery announcement message is transmitted.

Optionally, in an embodiment of the present disclosure, the period of the radio resources may be a period of pre-configured radio resources configured by a network, or a period of radio resources obtained autonomously by the second terminal.

Optionally, in an embodiment of the present disclosure, as shown in FIG. 11, the second terminal may further include:
a receiving unit 520 configured to receive a discovery request message transmitted by the first terminal via the SL SRB.

The transmitting unit 410 may be further configured to transmit a discovery response message to the first terminal via the SL SRB.

Optionally, in an embodiment of the present disclosure, the second terminal may be within a coverage of a network device.

Optionally, in an embodiment of the present disclosure, the discovery request message may be included in a MAC PDU that includes an LCID of a selected SL SRB.

Optionally, in an embodiment of the present disclosure, the selected SL SRB may be SRBO, and the LCID of SRBO may be 0.

Optionally, in an embodiment of the present disclosure, the receiving unit 520 may be further configured to receive the discovery request message on a Physical Sidelink Shared Channel (PSSCH) associated with a radio resource pool that includes configuration information of a Physical Sidelink Control Channel (PSCCH). The PSCCH is a control channel when the PSSCH is transmitted.

Optionally, in an embodiment of the present disclosure, the second terminal may further include:
a first configuring unit 530 configured to use a radio configuration parameter broadcasted in a network system message when the second terminal is in an RRC idle state; and
a second configuring unit 540 configured to use a radio configuration parameter broadcasted by a network device or a dedicated radio configuration parameter for the second terminal as configured by the network device, when the second terminal is in an RRC connected state.

The second terminal 500 in the embodiment of the present disclosure can implement the corresponding functions of the second terminal in the above method embodiments. For the corresponding processes, functions, implementations, and advantageous effects of each module (sub-module, unit, or component, etc.) in the second terminal 500, reference may be made to the corresponding descriptions in the above method embodiments, and details thereof will be omitted here.

It should be noted that the functions described by each module (sub-module, unit, or component, etc.) in the second terminal 500 of the embodiment of the present disclosure may be implemented by a different module (sub-module, unit, or component, etc.), or by the same module (sub-module, unit or component, etc.).

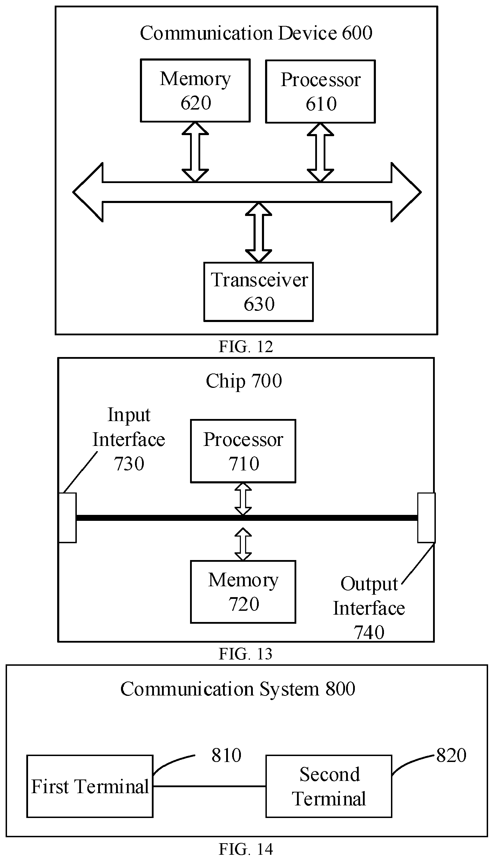

FIG. 12 is a schematic diagram showing a structure of a communication device 600 according to an embodiment of the present disclosure. The communication device 600 includes a processor 610, and the processor 610 can invoke and execute a computer program from a memory, to cause the communication device 600 to perform the method according to any of the embodiments of the present disclosure.

Optionally, as shown in FIG. 12, the communication device 600 may further include a memory 620. The processor 610 can invoke and execute a computer program from the memory 620 to cause the communication device 600 to perform the method according to any of the embodiments of the present disclosure. Here, the memory 620 may be a separate device independent of the processor 610, or may be integrated in the processor 610.

Optionally, as shown in FIG. 12, the communication device 600 may further include a transceiver 630. The processor 610 can control the transceiver 630 to communicate with other devices, and in particular to transmit information or data to other devices or receive information or data transmitted by other devices.

Here, the transceiver 630 may include a transmitter and a receiver. The transceiver 630 may further include one or more antennas.

Optionally, the communication device 600 may be the network device in the embodiment of the present disclosure, and the communication device 600 can perform corresponding procedures implemented by the network device in the method according to any of the embodiments of the present disclosure. Details thereof will be omitted here for simplicity.

Optionally, the communication device 600 may be the terminal device in the embodiment of the present disclosure, and the communication device 600 can perform corresponding procedures implemented by the first or second terminal in the method according to any of the embodiments of the present disclosure. Details thereof will be omitted here for simplicity.

FIG. 13 is a schematic diagram showing a structure of a chip 700 according to an embodiment of the present disclosure. The chip 700 includes a processor 710, and the processor 710 can invoke and execute a computer program from a memory to implement the method in the embodiment of the present disclosure.

Optionally, as shown in FIG. 13, the chip 700 may further include a memory 720. The processor 710 can invoke and execute a computer program from the memory 720 to implement the method performed by the terminal device or the network device in the embodiment of the present disclosure. Here, the memory 720 may be a separate device independent from the processor 710, or may be integrated in the processor 710.

Optionally, the chip 700 may further include an input interface 730. The processor 710 can control the input interface 730 to communicate with other devices or chips, and in particular, obtain information or data transmitted by other devices or chips.

Optionally, the chip 700 may further include an output interface 740. The processor 710 can control the output interface 740 to communicate with other devices or chips, and in particular, output information or data to other devices or chips.

Optionally, the chip can be applied to the network device in the embodiment of the present disclosure, and the chip can implement the corresponding processes implemented by the network device in the various methods of the embodiments of the present disclosure. For the sake of brevity, details thereof will be omitted here.

Optionally, the chip can be applied to the terminal device in the embodiment of the present disclosure, and the chip can implement the corresponding process implemented by the terminal device in each method of the embodiment of the present disclosure. For the sake of brevity, details thereof will be omitted here.

The chips applied in the network device and the terminal device may be same or different.

It can be appreciated that the chip in the embodiment of the present disclosure may be referred to as a system-level chip, a system-chip, a chip system, or a system-on-chip.

The processor as described above can be a general purpose processor, a Digital Signal Processor (DSP), a Field Programmable Gate Array (FPGA), an Application Specific Integrated Circuit (ASIC), or another programmable logic device, a transistor logic device, or a discrete hardware component. The above general purpose processor may be a microprocessor or any conventional processor.

The memory as described above may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

FIG. 14 is a block diagram of a communication system 800 according to an embodiment of the present disclosure. The communication system 800 includes a first terminal 810 and a second terminal 820.

The first terminal is configured to receive a discovery message transmitted by the second terminal via an SL SRB; and parse the discovery message to determine whether to select the second terminal as its relay terminal.

The second terminal is configured to transmit a discovery message to the first terminal via an SL SRB, such that the first terminal parses the discovery message to determine whether to select the second terminal as its relay terminal.

Here, the first terminal 810 can be configured to implement the corresponding functions implemented by the first terminal in any of the above methods, and the second terminal 820 can be configured to implement the corresponding functions implemented by the second terminal in any of the above methods. For the sake of brevity, details thereof will be omitted here.

The above embodiments may be implemented in whole or in part by software, hardware, firmware, or any combination thereof. When implemented in software, it can be implemented in whole or in part in the form of a computer program product. The computer program product includes one or more computer instructions. When the computer program instructions are loaded and executed on a computer, all or part of the processes or functions described in the embodiments of the present disclosure are generated. The computer may be a general purpose computer, a special purpose computer, a computer network, or any other programmable device. The computer instructions may be stored in a computer-readable storage medium, or transmitted from one computer-readable storage medium to another. For example, the computer instructions may be transmitted from a website, computer, server, or data center to another website, computer, server, or data center via wired communication (e.g., coaxial cable, optical fiber, or Digital Subscriber Line (DSL)) or wireless communication (e.g., infrared, wireless, microwave, etc.). The computer-readable storage medium may be any available medium that can be accessed by a computer, or a data storage device including one or more available mediums, such as a server, a data center, etc. The available mediums may include magnetic mediums (e.g., floppy disks, hard disks, magnetic tapes), optical medium (e.g., Digital Video Disc (DVD)), or semiconductor mediums (e.g., Solid State Disk (SSD)), etc.

It can be appreciated that, in the embodiments of the present disclosure, the numbering of the above processes does not necessarily mean their execution order. The execution order of the processes should be determined based on their functions and internal logics. The implementations of the embodiments of the present disclosure are not limited to any specific execution order.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A relay discovery method, comprising:
receiving, by a first terminal, a discovery message transmitted by a second terminal via a Sidelink Signaling Radio Bearer (SL SRB); and
parsing, by the first terminal, the discovery message to determine whether to select the second terminal as its relay terminal.

2. The method according to claim 1, wherein said parsing, by the first terminal, the discovery message to determine whether to select the second terminal as its relay terminal comprises:
parsing, by the first terminal, the discovery message to determine that the second terminal is available for serving as a relay for the first terminal, and selecting the second terminal as its relay terminal when measuring that a radio signal strength of the second terminal is higher than a first threshold.

3. The method according to claim 1 or 2, wherein said receiving, by the first terminal, the discovery message transmitted by the second terminal via the SL SRB further comprises:
receiving, by the first terminal, a discovery announcement message transmitted periodically by the second terminal via the SL SRB.

4. The method according to claim 3, wherein the discovery announcement message comprises at least a transmission period.

5. The method according to claim 4, further comprising:
receiving, by the first terminal, the discovery announcement message from the second terminal periodically via the SL SRB based on the transmission period after obtaining the transmission period.

6. The method according to claim 4 or 5, wherein the transmission period is equal to a period of radio resources on which the discovery announcement message is transmitted.

7. The method according to claim 6, wherein the period of the radio resources is a period of pre-configured radio resources configured by a network, or a period of radio resources obtained autonomously by the second terminal.

8. The method according to claim 1 or 2, further comprising: transmitting, by the first terminal, a discovery request message via the SL SRB,
wherein said receiving, by the first terminal, the discovery message transmitted by the second terminal via the SL SRB comprises: receiving, by the first terminal, a discovery response message transmitted by the second terminal via the SL SRB.

9. The method according to claim 8, wherein the first terminal triggers transmission of the discovery request message or monitors the discovery message in at least one of the following cases:
the first terminal is out of a coverage of a network device and needs to be connected to the network device, and the second terminal is within the coverage of the network device;
the first terminal is within the coverage of the network device, but a measured Reference Signal Received Power (RSRP) of a radio signal from the network device accessed by the first terminal is lower than a second threshold, and the second terminal is within the coverage of the network device; or
the first terminal needs to be connected to a third terminal.

10. The method according to claim 8 or 9, wherein the discovery request message is included in a Medium Access Control Protocol Data Unit (MAC PDU) that includes a Logical Channel Identity (LCID) of a selected SL SRB.

11. The method according to claim 10, wherein the selected SL SRB is SRBO, and the LCID of SRBO is 0.

12. The method according to claim 10 or 11, wherein said transmitting, by the first terminal, the discovery request message via the SL SRB comprises:
transmitting, by the first terminal, the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

13. The method according to claim 12, further comprising: determining a radio configuration parameter for the first terminal in at least one of the following schemes:
the first terminal uses a pre-configured radio configuration parameter when the first terminal is out of a coverage of a network device; or
the first terminal uses a radio configuration parameter broadcasted by the network device when the first terminal is within the coverage of the network device.

14. The method according to claim 13, wherein the first terminal using the radio configuration parameter broadcast by the network device when the first terminal is within the coverage of the network device comprises at least one of:
the first terminal using the radio configuration parameter broadcasted by the network device when the first terminal is within the coverage of the network device and the first terminal is in an RRC idle state; or
the first terminal using a radio resource and parameter broadcasted by the network device or a dedicated radio configuration parameter for the first terminal when the first terminal is within the coverage of the network device and the first terminal is in an RRC connected state.

15. A relay discovery method, comprising:
transmitting, by a second terminal, a discovery message to a first terminal via a Sidelink Signaling Radio Bearer (SL SRB), such that the first terminal parses the discovery message to determine whether to select the second terminal as its relay terminal.

16. The method according to claim 15, wherein said transmitting, by the second terminal, the discovery message to the first terminal via the SL SRB comprises:
transmitting, by the second terminal, a discovery announcement message periodically to the first terminal via the SL SRB.

17. The method according to claim 16, wherein the discovery announcement message comprises at least a transmission period.

18. The method according to claim 17, wherein the transmission period is equal to a period of radio resources on which the discovery announcement message is transmitted.

19. The method according to claim 18, wherein the period of the radio resources is a period of pre-configured radio resources configured by a network, or a period of radio resources obtained autonomously by the second terminal.

20. The method according to claim 15 or 16, further comprising: receiving, by the second terminal, a discovery request message transmitted by the first terminal via the SL SRB,
wherein said transmitting, by the second terminal, the discovery message to the first terminal via the SL SRB further comprises: transmitting, by the second terminal, a discovery response message to the first terminal via the SL SRB.

21. The method according to any one of claims 15 to 20, wherein the second terminal is within a coverage of a network device.

22. The method according to any one of claims 15 to 21, wherein the discovery request message is included in a Medium Access Control (MAC) Protocol Data Unit (PDU) that includes a Logical Channel Identity (LCID) of a selected SL SRB.

23. The method according to claim 22, wherein the selected SL SRB is SRBO, and the LCID of SRBO is 0.

24. The method according to claim 23, wherein said receiving, by the second terminal, the discovery request message transmitted by the first terminal via the SL SRB further comprises:
receiving, by the second terminal, the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

25. The method according to claim 24, further comprising determining a radio configuration parameter for the second terminal in at least one of the following schemes:
the second terminal uses a radio configuration parameter broadcasted in a network system message when the second terminal is in an RRC idle state; or
the second terminal uses a radio configuration parameter broadcasted by a network device or a dedicated radio configuration parameter for the second terminal as configured by the network device, when the second terminal is in an RRC connected state.

26. A first terminal, comprising:
a receiving unit configured to receive a discovery message transmitted by a second terminal via a Sidelink Signaling Radio Bearer (SL SRB); and
a processing unit configured to parse the discovery message to determine whether to select the second terminal as its relay terminal.

27. The first terminal according to claim 26, wherein the processing unit is further configured to parse the discovery message to determine that the second terminal is available for serving as a relay for the first terminal, and select the second terminal as its relay terminal when measuring that a radio signal strength of the second terminal is higher than a first threshold.

28. The first terminal according to claim 26 or 27, wherein the receiving unit is further configured to receive a discovery announcement message transmitted periodically by the second terminal via the SL SRB.

29. The first terminal according to claim 28, wherein the discovery announcement message comprises at least a transmission period.

30. The first terminal according to claim 29, wherein the receiving unit is further configured to receive the discovery announcement message from the second terminal periodically via the SL SRB based on the transmission period after obtaining the transmission period.

31. The first terminal according to claim 29 or 30, wherein the transmission period is equal to a period of radio resources on which the discovery announcement message is transmitted.

32. The first terminal according to claim 31, wherein the period of the radio resources is a period of pre-configured radio resources configured by a network, or a period of radio resources obtained autonomously by the second terminal.

33. The first terminal according to claim 26 or 27, further comprising:
a transmitting unit configured to transmit a discovery request message via the SL SRB,
wherein the receiving unit is further configured to receive a discovery response message transmitted by the second terminal via the SL SRB.

34. The first terminal according to claim 33, further comprising: a triggering unit configured to trigger transmission of the discovery request message or monitor the discovery message in at least one of the following cases:
the first terminal is out of a coverage of a network device and needs to be connected to the network device, and the second terminal is within the coverage of the network device;
the first terminal is within the coverage of the network device, but a measured Reference Signal Received Power (RSRP) of a radio signal from the network device accessed by the first terminal is lower than a second threshold, and the second terminal is within the coverage of the network device; or
the first terminal needs to be connected to a third terminal.

35. The first terminal according to claim 33 or 34, wherein the discovery request message is included in a Medium Access Control Protocol Data Unit (MAC PDU) that includes a Logical Channel Identity (LCID) of a selected SL SRB.

36. The first terminal according to claim 35, wherein the selected SL SRB is SRBO, and the LCID of SRBO is 0.

37. The first terminal according to claim 35 or 36, wherein the transmitting unit is further configured to transmit the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

38. The first terminal according to claim 37, further comprising at least one of:
a first configuring unit configured to use a pre-configured radio configuration parameter when the first terminal is out of a coverage of a network device; or
a second configuring unit configured to use a radio configuration parameter broadcasted by the network device when the first terminal is within the coverage of the network device.

39. The first terminal according to claim 38, wherein the second configuration unit is further configured to perform at least one of:
using the radio configuration parameter broadcasted by the network device when the first terminal is within the coverage of the network device and the first terminal is in an RRC idle state; or
using a radio resource and parameter broadcasted by the network device or a dedicated radio configuration parameter for the first terminal when the first terminal is within the coverage of the network device and the first terminal is in an RRC connected state.

40. A second terminal, comprising:
a transmitting unit configured to transmit a discovery message to a first terminal via a Sidelink Signaling Radio Bearer (SL SRB), such that the first terminal parses the discovery message to determine whether to select the second terminal as its relay terminal.

41. The second terminal according to claim 40, wherein the transmitting unit is further configured to transmit a discovery announcement message periodically to the first terminal via the SL SRB.

42. The second terminal according to claim 41, wherein the discovery announcement message comprises at least a transmission period.

43. The second terminal according to claim 42, wherein the transmission period is equal to a period of radio resources on which the discovery announcement message is transmitted.

44. The second terminal according to claim 43, wherein the period of the radio resources is a period of pre-configured radio resources configured by a network, or a period of radio resources obtained autonomously by the second terminal.

45. The second terminal according to claim 40 or 41, further comprising:
a receiving unit configured to receive a discovery request message transmitted by the first terminal via the SL SRB,
wherein the transmitting unit is further configured to transmit a discovery response message to the first terminal via the SL SRB.

46. The second terminal according to any one of claims 40 to 45, wherein the second terminal is within a coverage of a network device.

47. The second terminal according to any one of claims 40 to 46, wherein the discovery request message is included in a Medium Access Control (MAC) Protocol Data Unit (PDU) that includes a Logical Channel Identity (LCID) of a selected SL SRB.

48. The second terminal according to claim 47, wherein the selected SL SRB is SRBO, and the LCID of SRBO is 0.

49. The second terminal according to claim 48, wherein the receiving unit is further configured to receive the discovery request message on a Physical Sidelink Shared Channel (PSSCH) associated with a radio resource pool that includes configuration information of a Physical Sidelink Control Channel (PSCCH), the PSCCH being a control channel when the PSSCH is transmitted.

50. The second terminal according to claim 49, further comprising:
a first configuring unit configured to use a radio configuration parameter broadcasted in a network system message when the second terminal is in an RRC idle state; and
a second configuring unit configured to use a radio configuration parameter broadcasted by a network device or a dedicated radio configuration parameter for the second terminal as configured by the network device, when the second terminal is in an RRC connected state.

51. A terminal device, comprising a processor and a memory, wherein the memory has a computer program stored thereon, and the processor is configured to invoke and execute the computer program stored in the memory to cause the terminal device to perform the method according to any of claims 1 to 14.

52. A terminal device, comprising a processor and a memory, wherein the memory has a computer program stored thereon, and the processor is configured to invoke and execute the computer program stored in the memory to cause the terminal device to perform the method according to any of claims 15 to 25.

53. A chip, comprising a processor configured to invoke and execute a computer program from a memory, to cause a device provided with the chip to perform the method according to any of claims 1 to 14.

54. A chip, comprising a processor configured to invoke and execute a computer program from a memory, to cause a device provided with the chip to perform the method according to any of claims 15 to 25.

55. A computer-readable storage medium, storing a computer program which, when executed by a device, causes the device to perform the method according to any of claims 1 to 14.

56. A computer-readable storage medium, storing a computer program which, when executed by a device, causes the device to perform the method according to any of claims 15 to 25.

57. A computer program product, comprising computer program instructions that cause a computer to perform the method according to any of claims 1 to 14.

58. A computer program product, comprising computer program instructions that cause a computer to perform the method according to any of claims 15 to 25.

59. A computer program, causing a computer to perform the method according to any of claims 1 to 14.

60. A computer program, causing a computer to perform the method according to any of claims 15 to 25.
